(19) Europäisches Patentamt
European Patent Office
Office européen des brevets

(11) **EP 2 603 679 B1**

(12) **EUROPÄISCHE PATENTSCHRIFT**

(45) Veröffentlichungstag und Bekanntmachung des Hinweises auf die Patenterteilung:
**05.10.2016 Patentblatt 2016/40**

(21) Anmeldenummer: **11733845.9**

(22) Anmeldetag: **18.07.2011**

(51) Int Cl.:
***F01N 3/20*** *(2006.01)*

(86) Internationale Anmeldenummer:
**PCT/EP2011/062253**

(87) Internationale Veröffentlichungsnummer:
**WO 2012/019873 (16.02.2012 Gazette 2012/07)**

(54) **EINSPRITZVORRICHTUNG**

INJECTION APPARATUS

DISPOSITIF D'INJECTION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.08.2010 DE 102010039048**

(43) Veröffentlichungstag der Anmeldung:
**19.06.2013 Patentblatt 2013/25**

(73) Patentinhaber: **Robert Bosch GmbH**
**70442 Stuttgart (DE)**

(72) Erfinder:
- **RODRIGUEZ-AMAYA, Nestor**
  **70372 Stuttgart (DE)**
- **DOEHRING, Jochen**
  **70439 Stuttgart-Stammheim (DE)**
- **HANNEKE, Juergen**
  **70499 Stuttgart (DE)**
- **NENTWIG, Godehard**
  **70499 Stuttgart (DE)**

(56) Entgegenhaltungen:
EP-A1- 1 335 126        EP-A1- 1 878 920
WO-A1-2004/042224    DE-A1-102007 027 667

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die Erfindung betrifft eine Einspritzvorrichtung für Fluid, insbesondere eine Einspritzvorrichtung zum Einspritzen von Fluid in einen Abgasstrang eines Verbrennungsmotors.

Die Anforderungen an die Abgasqualität von Brennkraftmaschinen, insbesondere von Brennkraftmaschinen zum Antrieb von Kraftfahrzeugen, haben in den letzten Jahren ständig zugenommen. Vor allem bei Dieselmotoren stellen $NO_x$ Emissionen ein Problem dar, dem mit Hilfe von so genannten SCR-Katalysatoren entgegengewirkt wird. In einem SCR-Katalysator werden umweltschädliche $NO_x$ mit Hilfe von $NH_3$, das dem Katalysator in der Regel in Form einer wässrigen Harnstofflösung zugeführt wird, in $N_2$ und $H_2O$ umgewandelt.

Um die Harnstofflösung den Abgasen des Verbrennungsmotors zuzuführen, ist ein Dosiersystem erforderlich, welches herkömmlicherweise eine elektrisch betriebene Pumpe und ein elektrisch angesteuertes Dosierventil umfasst. Solche bekannten Dosiersysteme sind aufwändig und teuer in der Herstellung, Montage und Wartung.

EP 1 878 920 A1 offenbart eine Flüssigkeitspumpe mit einem Einlass, einem Auslass, einer Pumpenkammer zur Aufnahme der Flüssigkeit und einem Aktuator, der zwischen einer ersten Position und einer zweiten Position bewegbar und eingerichtet ist, um Flüssigkeit aus der Pumpenkammer in den Auslass zu pumpen. Der Einlass und der Auslass sind in Fluidverbindung mit einer Versorgungspassage, wenn der Aktuator in der ersten Position ist. Die Versorgungspassage verläuft um den Aktuator, um eine Wärmeübertragung von dem Aktuator an die Flüssigkeit zu ermöglichen.

US 2007/0295003 A1 beschreibt eine Hochdruck-Dosierpumpe, die vorgesehen ist, um einem Abgasreduktionssystem ein Reduktionsmittel zur Verfügung zu stellen. Die Hochdruck-Dosierpumpe hat einen Elektromagneten, um einen Kolben anzutreiben, der beweglich in einer inneren Bohrung eines Ventilgehäuses der Pumpe angeordnet ist. Die innere Bohrung hat eine Druckkammer mit einem Einlass-Ein-Wege-Ventil und einem Auslass-Ein-Wege-Ventil. Bewegen des Kolbens bewirkt, dass Reduktionsmittel unter hohem Druck einer Einspritzdüse zugeführt wird. Die Einspritzdüse ist an einer Stelle angeordnet, welche eine maximale Reduktion unerwünschter Schadstoffe in den Abgasen ermöglicht.

Die WO 2004/042224 A1 beschreibt eine Kraftstoffeinspritzeinrichtung mit einer Druckübersetzungseinrichtung.

Offenbarung der Erfindung

Eine Aufgabe der Erfindung ist es, ein verbessertes Dosiersystem bereit zu stellen, welches ein effektives Einspritzen von Fluid ermöglicht und kostengünstig herzustellen, zu montieren und zu warten ist.

Die Aufgabe wird durch eine erfindungsgemäße Einspritzvorrichtung für ein Dosiersystem nach dem unabhängigen Patentanspruch 1 gelöst. Die abhängigen Patentansprüche beschreiben vorteilhafte Ausgestaltungen einer erfindungsgemäßen Einspritzvorrichtung.

Eine erfindungsgemäße Einspritzvorrichtung, die insbesondere zum Einspritzen von Fluid in einen Abgasstrang eines Verbrennungsmotors ausgebildet ist, umfasst eine Ventileinheit, die eine Ventilnadel (Düsennadel), einen Steuerraum und einen Einspritzraum mit wenigstens einer Einspritzöffnung hat. Die Einspritzvorrichtung ist so ausgebildet, dass die Ventilnadel durch eine Druckdifferenz zwischen dem Einspritzraum und dem Steuerraum zwischen einer geöffneten Position, in der die Ventilnadel einen Fluidfluss durch die Einspritzöffnung freigibt, und einer geschlossenen Position, in der die Ventilnadel die Einspritzöffnung verschließt, bewegbar ist.

In die Einspritzvorrichtung ist zusätzlich eine Pumpeinheit integriert, die ausgebildet ist, Fluid aus einem Fluidzulauf anzusaugen und unter erhöhtem Druck, d.h. einem Druck, der höher als der Druck im Fluidzulauf ist, an die Ventileinheit abzugeben. Bei geöffneter Ventileinheit wird so Fluid mit einem Druck, der höher als der Druck im Fluidzulauf ist, aus der Einspritzvorrichtung ausgegeben.

Dabei weist die Pumpeinheit einen Kolbenraum und einen innerhalb des Kolbenraums beweglichen Kolben auf. Der Kolben ist dabei derart angeordnet und ausgebildet, dass das Volumen des Kolbenraums bzw. der Druck im Kolbenraum durch Bewegen des Kolbens variierbar sind. Durch eine derartige Kombination aus einem Kolbenraum und einem beweglichen Kolben wird eine zuverlässige und effektive Pumpeinheit zur Verfügung gestellt, die geeignet ist, den Druck des einzuspritzenden Fluids zu erhöhen.

Dabei ist der Kolben durch Bestromen eines in der Einspritzvorrichtung angeordneten Elektromagneten bewegbar. Ein Elektromagnet stellt einen einfachen, kostengünstigen und zuverlässigen Aktuator zum Bewegen des Kolbens zur Verfügung. Alternativ kann der Aktuator als Piezo-Aktuator ausgebildet sein.

In einer Ausführungsform sind die Ventileinheit und die Pumpeinheit in einem gemeinsamen Gehäuse angeordnet. Dies ermöglicht einen besonders kompakten Aufbau der Einspritzvorrichtung. Die Leitungswege zwischen der Druck erzeugenden Pumpeinheit und der Ventileinheit, in denen das Fluid im Betrieb unter erhöhtem Druck steht, sind kürzer als in einem herkömmlichen Aufbau mit einer externen Pumpeinheit und verlaufen vollständig innerhalb der Einspritzvorrichtung. Die Gefahr unkontrollierten Austretens von Fluid aus der Einspritzvorrichtung (Leckage) ist reduziert und die hydraulische Stabilität des Systems verbessert.

Eine erfindungsgemäße Einspritzeinheit ermöglicht beim Öffnungsvorgang eine schnelle Druckentlastung der Ventilnadel, so dass kurze Schaltzeiten und eine große Bandbreite möglicher Einspritzmengen realisierbar sind.

Eine reduzierte Baugröße der Einspritzvorrichtung ermöglicht eine große Variabilität bei der Montage, z.B. an einem Abgasstrang, und vergrößert den Freiraum bei der Gestaltung des Fluidtanks; insbesondere ermöglicht eine reduzierte Baugröße der Einspritzvorrichtung, das nutzbare Volumen des Fluidtanks zu vergrößern.

Der notwendige Einspritzdruck wird erfindungsgemäß in der Einspritzvorrichtung selbst erzeugt. Auf eine (Hochdruck-)Zuleitung, in der das Fluid unter erhöhtem Druck steht und die daher besonders stabil auszubilden ist und die dennoch anfällig für Störungen und Leckagen ist, kann verzichtet werden. Dies erhöht die Betriebssicherheit des Einspritzsystems.

Eine erfindungsgemäße Einspritzvorrichtung hat im Betrieb einen geringen Spannungs- und Leistungsbedarf und ermöglicht ein einheitliches Design für eine Vielzahl von Anwendungen.

In einer Ausführungsform weist die Ventileinheit einen Steuerraum auf, der durch ein Ende der Ventilnadel begrenzt wird, wobei das Volumen des Steuerraums durch Bewegen der Ventilnadel variierbar ist, bzw. die Ventilnadel durch Variieren des Drucks im Steuerraum bewegbar ist. Eine solche Anordnung ermöglicht es, die Ventilnadel durch Variation des Fluiddrucks im Steuerraum anzusteuern. Auf einen mechanischen Aktuator zum Ansteuern der Ventilnadel kann verzichtet werden. Dies vereinfacht den Aufbau der Einspritzvorrichtung und insbesondere der Ventileinheit.

In einer Ausführungsform ist der Steuerraum hydraulisch mit einer Zulaufleitung, durch welche der Einspritzvorrichtung im Betrieb Fluid zuführbar ist, verbunden. Im Steuerraum herrscht so der gleiche Fluiddruck wie in der Zulaufleitung und die Ventilnadel wird durch den Fluiddruck im Steuerraum in eine Verschlussposition gedrückt, in der sie einen Fluidfluss aus der Einspritzvorrichtung verhindert. Die Ventileinheit wird im Betrieb durch den Fluiddruck zuverlässig verschlossen, ohne dass ein zusätzlicher Aktuator notwendig ist.

In einer Ausführungsform ist der Kolbenraum durch ein Ein-Wege-Ventil, das z.B. als Rückschlag-Kugelventil ausgebildet ist, hydraulisch mit dem Zulauf verbunden. Das Ein-Wege-Ventil verhindert, dass Fluid aus dem Kolbenraum zurück in die Zulaufleitung strömt und dabei der durch Bewegen des Kolbens im Kolbenraum aufgebaute erhöhte Druck durch einen Fluidfluss aus dem Kolbenraum in die Zulaufleitung abgebaut wird.

In einer Ausführungsform sind der Kolben und die Ventilnadel entlang einer gemeinsamen Achse bewegbar. Eine Einspritzvorrichtung, bei welcher der Kolben und die Ventilnadel entlang einer gemeinsamen Achse bewegbar sind, ist besonders einfach, platzsparend und kostengünstig aufbaubar. Insbesondere kann eine solche Einspritzvorrichtung in Längsrichtung eines zylinderförmigen Gehäuses aufgebaut werden, wobei der Kolben und die Ventilnadel zylinderförmig ausgebildet und parallel zur Achse des Zylinders bewegbar sind. Eine solche, zylinderförmig ausgebildete Einspritzvorrichtung ist besonders haltbar sowie einfach und kostengünstig herstellbar.

In einer Ausführungsform ist der Kolben durch ein elastisches Kolben-Federelement abgestützt, welches den Kolben in Richtung einer Ausgangsposition drückt. Ein solches elastisches Kolben-Federelement ermöglicht es, sicherzustellen, dass der Kolben bei deaktiviertem Elektromagneten zuverlässig in eine Ausgangsposition bewegt wird.

In einer Ausführungsform ist die Ventilnadel durch ein elastisches Ventilnadel-Federelement derart an einem Gehäuse der Einspritzvorrichtung abgestützt, dass das elastische Ventilnadel-Federelement die Ventilnadel bei deaktiviertem, d.h. nicht bestromtem, Elektromagneten in die Verschlussposition drückt und die Ventileinheit bei deaktiviertem Elektromagneten zuverlässig verschlossen ist.

Die Erfindung wird im Folgenden anhand der beigefügten Figuren näher erläutert.

Dabei zeigt

Figur 1 eine erste Schnittansicht eines Ausführungsbeispiels einer erfindungsgemäßen Einspritzvorrichtung während eines Ansaugvorgangs;

Figur 2 eine zweite Schnittansicht der erfindungsgemäßen Einspritzvorrichtung während eines Einspritzvorgangs; und

Figur 3 einen vergrößerten schematischen Ausschnitt einer erfindungsgemäßen Einspritzvorrichtung; insbesondere einen oberen Bereich des Kolbens mit einem Anker und einem umgebenden Elektromagneten.

Angaben wie "oben" und "unten" dienen in der folgenden Figurenbeschreibung der besseren Erläuterung der in den Figuren gezeigten Ausführungsbeispiele der Erfindung, ohne die Erfindung auf die gezeigten Ausführungsbeispiele oder eine bestimmte Orientierung und/oder Einbauposition zu beschränken.

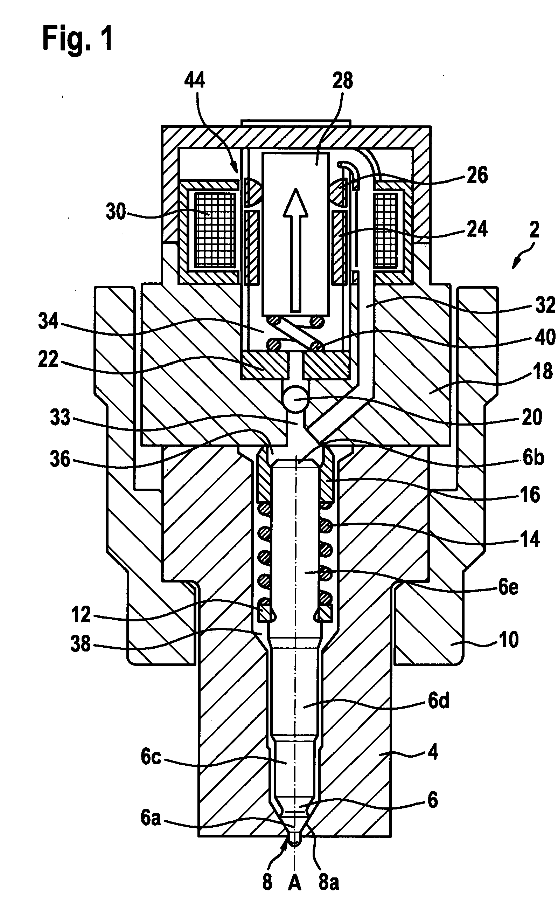

Figur 1 zeigt eine erste Schnittansicht einer erfindungsgemäßen Einspritzvorrichtung 2 während eines Ansaugvorgangs.

Eine erfindungsgemäße Einspritzvorrichtung 2 weist einen beispielsweise zylinderförmig ausgebildeten Düsenkörper 4 auf, entlang dessen Längsachse A ein beispielsweise im Wesentlichen zylindrisch geformter Einspritzraum 38 ausgebildet ist. An dem in der Figur 1 unten dargestellten stirnseitigen Ende des Einspritzraumes 38 ist eine Einspritzöffnung 8 ausgebildet, durch die während eines Einspritzvorgangs Fluid aus dem Einspritzraum 38 austritt. Ein unterer, an die Einspritzöffnung 8 angrenzender Bereich des Einspritzraumes 38 hat in einer Ebene quer zur Längsachse A des Düsenkörpers 4 einen kleineren Querschnitt als ein oberer Bereich des Einspritzraumes 38, der einen größeren Abstand zur Einspritzöffnung 8 hat.

Im Einspritzraum 38 ist eine im Wesentlichen zylinderförmig ausgebildete Ventilnadel 6 angeordnet, deren Längsachse entlang der Längsachse A des Düsenkörpers 4 ausgerichtet ist. Die Ventilnadel 6 ist abgestuft mit einem kegelförmigen unteren Bereich 6a und mehreren zylindrischen Bereichen 6b, 6c, 6d, 6e ausgebildet, wobei die zylindrischen Bereiche 6b, 6c, 6d, 6e in einer Ebene quer zur Längsachse A der Ventilnadel 6 einen umso größeren Querschnitt haben, je größer ihr Abstand vom unteren, kegelförmigen Bereich 6a ist.

Die Ventilnadel 6 ist entlang ihrer Längsachse A zwischen einer Verschlussposition, in der das untere Ende 6a der Ventilnadel 6 auf dem Ventilsitz 8a aufliegt und die Einspritzöffnung 8 im Wesentlichen fluiddicht verschließt, und einer geöffneten Position, in der die Ventilnadel 6 die Einspritzöffnung 8 freigibt, beweglich.

Um den Umfang eines oberen, von der Einspritzöffnung 8 abgewandten Bereiches der Ventilnadel 6 ist eine zylinderförmige Steuerraumhülse 16 angeordnet. Innerhalb der Steuerraumhülse 16 ist oberhalb des oberen stirnseitigen Endes 6b der Ventilnadel 6 ein Steuerraum 36 ausgebildet, dessen Volumen durch Bewegen der Ventilnadel 6 in Richtung parallel zu ihrer Längsachse A variierbar ist. Umgekehrt ist die Ventilnadel 6 durch Variieren der Differenz zwischen dem Druck im Einspritzraum 38 und dem Druck im Steuerraum 36 parallel zu ihrer Längsachse A bewegbar.

Auf der oberen, von der Ventilnadel 6 abgewandten Seite wird der Steuerraum 36 durch eine Steuerplatte 18 begrenzt. Die Steuerplatte 18 ist durch in der Fig. 1 nicht sichtbare Sicherungsstifte (Poke-Yoka-Stifte) 46 und eine den Düsenkörper 4 und die Steuerplatte 18 umgebende Düsenspannmutter 10 an dem Düsenkörper 4 fixiert.

In einem in Längsrichtung mittleren Bereich 6e der Ventilnadel 6 ist um den Umfang der Ventilnadel 6 ein Abstützring 12 ausgebildet. Zwischen dem Abstützring 12 und der Steuerraumhülse 16 ist um den Umfang der Ventilnadel 6 ein zylindrisches Ventilnadel-Federelement 14 angeordnet, das sich mit seinen beiden Stirnseiten einerseits an der Steuerraumhülse 16 und andererseits an dem Abstützring 12 abstützt. Das Ventilnadel-Federelement 14 drückt die Ventilnadel 6 elastisch in die untere Verschlussposition, in der die Ventilnadel 6 die Einspritzöffnung 8 im Wesentlichen fluiddicht verschließt.

In der Steuerplatte 18 ist ein Fluidkanal 33 mit einem Ein-Wege-Ventil 20, das beispielsweise als Kugel- bzw. Rückschlagventil ausgestaltet ist, ausgebildet. Bei geöffnetem Ein-Wege-Ventil 20 ist der Steuerraum 36 über den Fluidkanal 33 hydraulisch mit einem Kolbenraum 34 verbunden, der oberhalb des Ein-Wege-Ventils 20 in der Steuerplatte 18 ausgebildet ist.

Das Volumen des Kolbenraums 34 ist auf einer von dem Ein-Wege-Ventil 20 abgewandten Seite durch einen beweglichen Kolben 28 begrenzt, der oberhalb des Kolbenraums 34 angeordnet und durch ein Kolben-Federelement 40 elastisch auf der Steuerplatte 18 abgestützt ist. Das Volumen des Kolbenraums 34 ist durch Bewegen des Kolbens 28 in einer Richtung parallel zur Längsachse A variierbar.

Zwischen einem unteren, der Ventilnadel 6 zugewandten stirnseitigen Ende des elastischen Kolben-Federelements 40 und der Steuerplatte 18 ist eine Einstellscheibe 22 angeordnet. Der Hub des Kolbens 28 ist durch die Wahl der Dicke der Einstellscheibe 22 einstellbar.

Um den Umfang des Kolbens 28 sind ein metallischer Innenpol 24 und eine Spule 30 ausgebildet, die zusammen einen Elektromagneten bilden, der geeignet ist, den Kolben 28 zu bewegen. An einem oberen, von der Steuerplatte 18 abgewandten Bereich des Kolbens 28 ist um den Umfang des Kolbens 28 ein Anker 26 ausgebildet. Der Anker 26 wird von dem Innenpol 24 magnetisch angezogen, wenn ein elektrischer Strom durch die Spule 30 fließt.

Während eines Ansaugvorgangs ("Saughub"), wie er in der Figur 1 gezeigt ist, bewegt sich der Kolben 28 bei deaktivierter Spule 30, d.h. wenn kein elektrischer Strom durch die Spule 30 fließt, unter Einwirkung der von dem elastischen Kolben-Federelement 40 ausgeübten Kraft in einer Richtung parallel zur Längsachse A von der Steuerplatte 18 weg, so dass sich der Abstand zwischen dem Kolben 28 und der Steuerplatte 18 vergrößert. Das Volumen des Kolbenraums 34 wird vergrößert und Fluid aus dem Zulauf 32 strömt durch den Steuerraum 36, den Fluidkanal 33 und das geöffnete Ein-Wege-Ventil 20 in den Kolbenraum 34.

Durch Zusammenwirken des Fluiddrucks in dem mit dem Zulauf 32 verbundenen Steuerraum 36 und der elastischen Kraft des Ventilnadel-Federelements 14 wird die Ventilnadel 6 in die untere Verschlussposition gedrückt, in der das untere Ende 6a der Ventilnadel 6 die Einspritzöffnung 8 fluiddicht verschließt und kein Fluid aus dem Einspritzraum 38 durch die Einspritzöffnung 8 ausströmen kann.

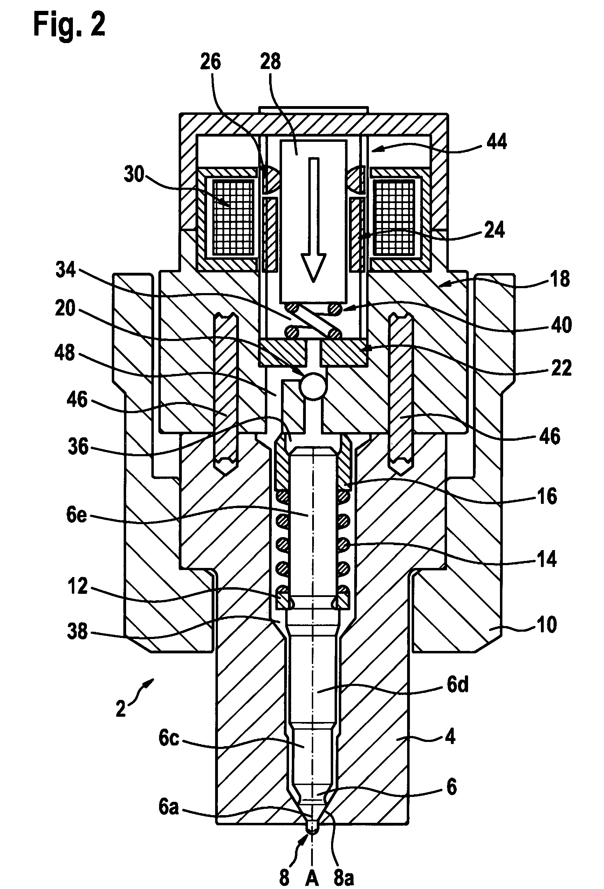

Figur 2 zeigt einen Schnitt durch die erfindungsgemäße Einspritzvorrichtung 2, wie sie in der Figur 1 gezeigt ist, in einer um 90° um die Längsachse A der Einspritzvorrichtung 2 gedrehten Ebene.

Die bereits in der Figur 1 gezeigten Bauelemente sind mit den gleichen Bezugszeichen versehen und werden nicht erneut im Detail beschrieben.

In der in der Figur 2 gezeigten zweiten Schnittebene ist der Zulauf 32 nicht erkennbar. Dafür ist in dieser Ebene ein in der Steuerplatte 18 ausgebildeter Verbindungskanal 48 erkennbar, der den Kolbenraum 34 hydraulisch mit dem Einspritzraum 38 verbindet. Der Verbindungskanal 48 ist so ausgebildet, dass ein Fluidfluss zwischen dem Kolbenraum 34 und dem Einspritzraum 38 unabhängig davon möglich ist, ob das Ein-Wege-Ventil 20 geöffnet oder geschlossen ist.

Weiterhin sind in der Figur 2 die bereits im Zusammenhang mit der Figur 1 erwähnten Sicherungsstifte 46 erkennbar, durch welche die Steuerplatte 18 am Düsenkörper 4 fixiert ist.

Um einen Einspritzvorgang auszulösen, wird eine elektrische Spannung an die Spule 30 angelegt, so dass ein elektrischer Strom durch die Spule 30 fließt. Der Anker 26 wird von dem durch den Stromfluss in der Spule erzeugten elektromagnetischen Feld in Richtung auf den Innenpol 24 gezogen und der mit dem Anker 26 verbundene Kolben 28 bewegt sich in Richtung auf die Steuerplatte 18 ("Druck- bzw. Einspritzhub").

Durch die Bewegung des Kolbens 28 in Richtung auf die Steuerplatte 18 wird das Volumen des Kolbenraums 34 reduziert und der Fluiddruck im Kolbenraum 34 erhöht. Das Ein-Wege-Ventil 20 schließt und verhindert einen Rückfluss von Fluid aus dem Kolbenraum 34 in den Zulauf 32. Durch den Verbindungskanal 48 strömt Fluid aus dem Kolbenraum 34 in den Einspritzraum 38 und erhöht auch dort den Fluiddruck.

Sobald ein bestimmter, kritischer Wert des Fluiddrucks im Einspritzraum 38 überschritten ist, reichen der Fluiddruck im Steuerraum 36 und die Kraft des Ventilnadel-Federelements 14 nicht mehr aus, um die Ventilnadel 6 gegen den Druck des in den Einspritzraum 38 eingeströmten Fluids, der auf die Bereiche 6a, 6c, 6d, 6e der Ventilnadel 6 einwirkt und insbesondere an den Übergängen zwischen den Bereichen 6a, 6c, 6d und 6e eine in Richtung auf den Steuerraum 36 gerichtete Kraft erzeugt, in der Verschlussposition zu halten. Die Ventilnadel 6 bewegt sich gegen den Fluiddruck im Steuerraum 36 aus der Verschlussposition in eine geöffnete Position, der untere Bereich 6a der Ventilnadel 6 löst sich vom Ventilsitz 8a und gibt die Einspritzöffnung 8 frei.

Fluid, das durch die Öffnungsbewegung der Ventilnadel 6 aus dem Steuerraum 36 verdrängt wird, strömt zurück in den Zulauf 32, so dass sich der Fluiddruck im Steuerraum 36 nicht wesentlich erhöht. Die Ventilnadel 6 hebt sich dadurch besonders schnell aus ihrem Sitz 8a und gibt die Einspritzöffnung 8 frei.

Durch die geöffnete Einspritzöffnung 8 strömt unter erhöhtem Druck stehendes Fluid aus dem Einspritzraum 38 so lange aus (Einspritzvorgang), bis der Fluiddruck im Einspritzraum 38 soweit abgefallen ist, dass er nicht mehr in der Lage ist, die Ventilnadel 6 gegen die Kombination des Fluiddrucks im Steuerraum 36 und die Kraft des Ventilnadel-Federelements 14 in einer geöffneten Position zu halten. Die Ventilnadel 6 bewegt sich unter Einwirkung des Fluiddrucks im Steuerraum 36 und der Kraft des Ventilnadel-Federelements 14 wieder in die untere Verschlussposition, in der das untere Ende 6a der Ventilnadel 6 gegen den Ventilsitz 8a gedrückt wird und die Einspritzöffnung 8 verschließt.

Durch Abschalten des Stromflusses durch die Spule 30 wird der Elektromagnet deaktiviert und der Kolben 28 bewegt sich unter Einfluss des Kolben-Federelements 40 wieder in eine Richtung, in der sich der Abstand des Kolbens 28 von der Steuerplatte 18 und das Volumen des Kolbenraums 34 vergrößern ("Saughub", siehe Figur 1). Das Ein-Wege-Ventil 20 öffnet und Fluid strömt aus der Zulauf 32 in den Kolbenraum 34.

Durch erneutes Anlegen einer elektrischen Spannung an die Spule 30 kann nun ein weiterer Einspritzvorgang, wie er zuvor beschrieben worden ist, ausgelöst werden.

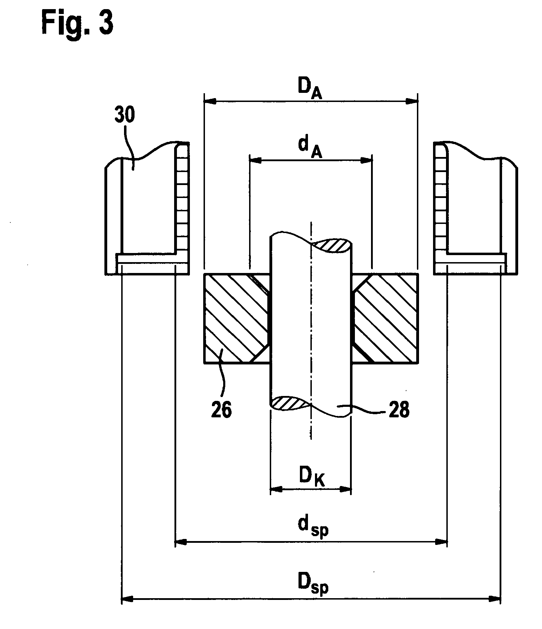

Im Folgenden wird unter Bezugnahme auf die Figur 3 beispielhaft eine mögliche Dimensionierung der Druckeinheit und insbesondere der Spule 30 des Elektromagneten zur Erzeugung eines vorgegebenen Einspritzdrucks beschrieben:

Bei einem Druck von 7 bar im Fluidzulauf 32 soll beispielsweise ein Einspritzdruck von 9,5 bar erzeugt werden, so dass durch die Druckeinheit ein zusätzlicher Druck von 2,5 bar zu erzeugen ist.

Bei einem angenommenen Durchmesser $D_K$ des Kolbens 28 von 9 mm, d.h. einer Größe der kreisförmigen Stirnfläche A des Kolbens von $A_K = 19,63$ mm² ergibt sich eine auf den Kolben 28 auszuübende Kraft

$$F_K = \Delta p * A_K = 2,5 \text{ bar} * 19,63 \text{ mm}^2 = 4,9 \text{ N}$$

Diese Kraft F ist als magnetische Kraft, welche durch die Spule 28 auf den Anker 26 ausgeübt wird, aufzubringen:

$$F_m = B^2 * A_A/8\pi.$$

Bei einer angenommen, durch die Spule 28 erzeugten magnetischen Feldstärke von B = 1,8 T ergibt sich für die notwendige Fläche des Ankers $A_A$:

$$A_A = 8\pi * F_m / B^2 \approx 4,5 \text{ mm}^2.$$

Unter der Annahme, dass die Wirkfläche des auf den Kolben 28 aufgepressten Ankers 26 einen inneren Durchmesser von $d_A = 7$ mm hat, ergibt sich ein notwendiger Außendurchmesser $D_A$ des Ankers 26:

$$D_A^2 = A_A / 4\pi + d_A^2$$

$$D_A \approx 7,5 \text{ mm}.$$

Bei einer angenommenen Durchflutung $\theta$ von 150 Aw und einem angenommenen maximalen Strom durch die Spule 28 von $i_{max}=2,2$ A ergeben sich

$$N = \theta / i_{max} \approx 68$$

Windungen der Spule 28.

Wird für die Spule 28 ein Draht mit einem Durchmesser $d_D$ von 0,45 mm verwendet und die Spule 28 in 6 Lagen mit jeweils ca. 12 Windungen gewickelt, so ergibt sich bei einem Innendurchmesser $d_{Sp}$ der Spule 28 von ca. 5,5 mm eine Drahtlänge von ca. 2,5 m.

Ein für derartige Spulen üblicherweise verwendeter Draht dieser Länge hat bei einer Temperatur von 20 °C einen elektrischen Widerstand von etwa 5,5 Ω. Bei einer Versorgungsspannung von 16 V ergibt sich so, dass ein Strom i von

$$i = U/R \approx 2,9 \text{ A}$$

durch die Spule 30 fließen muss, um den gewünschten Einspritzdruck von 9,5 bar zu erzeugen.

## Patentansprüche

1. Einspritzvorrichtung (2), insbesondere zum Einspritzen von Fluid in einen Abgasstrang eines Verbrennungsmotors, mit
einer Ventileinheit, die
eine Ventilnadel (6),
einen Einspritzraum (38) mit wenigstens einer Einspritzöffnung (8), und einen Steuerraum (36) hat, wobei die Einspritzvorrichtung (2) so ausgebildet ist, dass eine Druckdifferenz zwischen dem Einspritzraum (38) und dem Steuerraum (36) eine Bewegung der Ventilnadel (6) zwischen einer geöffneten Position, in der die Ventilnadel (6) einen Fluidfluss durch die Einspritzöffnung (8) freigibt, und einer geschlossenen Position, in der die Ventilnadel (6) die Einspritzöffnung (8) verschließt, bewirkt,
und einer in die Einspritzvorrichtung (2) integrierten Pumpeinheit, die ausgebildet ist, um Fluid aus einem Fluidzulauf (32) anzusaugen und der Ventileinheit unter erhöhtem Druck zur Verfügung zu stellen, wobei die Pumpeinheit einen Kolbenraum (34) und einem beweglichen Kolben (28) aufweist und wobei das Volumen des Kolbenraums (34) durch Bewegen des Kolbens (28) variierbar ist, **dadurch gekennzeichnet, dass** der Kolben (28) durch Bestromen der Spule (38) eines Elektromagneten oder mittels eines Piezo-Aktuators bewegbar ist.

2. Einspritzvorrichtung (2) nach Anspruch 1, wobei die Ventileinheit und die Pumpeinheit innerhalb eines gemeinsamen Hülsenkörpers angeordnet sind.

3. Einspritzvorrichtung (2) nach Anspruch 1 oder 2, wobei der Steuerraum (36) durch ein Ende der Ventilnadel (6) begrenzt ist und das Volumen des Steuerraums durch Bewegen der Ventilnadel (6) variierbar ist.

4. Einspritzvorrichtung (2) nach Anspruch 3, wobei der Steuerraum (36) in hydraulischer Verbindung mit dem Fluidzulauf (32) steht.

5. Einspritzvorrichtung (2) nach einem der vorhergehenden Ansprüche, wobei der Kolbenraum (34) durch ein Ein-Wege-Ventil (20), welches einen Rückfluss von Fluid aus dem Kolbenraum (34) in den Fluidzulauf (32) verhindert, hydraulisch mit dem Fluidzulauf (32) verbunden ist.

6. Einspritzvorrichtung (2) nach Anspruch 5, wobei der Kolbenraum (34) durch den Steuerraum (36) mit dem Fluidzulauf (32) verbunden ist und das Ein-Wege-Ventil (20) zwischen dem Kolbenraum (34) und dem Steuerraum (36) angeordnet ist.

7. Einspritzvorrichtung (2) nach einem der vorhergehenden Ansprüche, wobei der Kolben (28) und die Ventilnadel (6) entlang einer gemeinsamen Achse bewegbar sind.

8. Einspritzvorrichtung (2) nach einem der vorhergehenden Ansprüche, wobei der Kolben (28) durch ein elastisches Element (40) beweglich abgestützt ist.

## Claims

1. Injection device (2), in particular for injecting fluid into an exhaust tract of an internal combustion engine, having
a valve unit which has
a valve needle (6),
and injection chamber (38) with at least one injection opening (8), and
a control chamber (36),
wherein the injection device (2) is designed such that a pressure difference between the injection chamber (38) and the control chamber (36) causes a movement of the valve needle (6) between an open position, in which the valve needle (6) permits a fluid flow through the injection opening (8), and a closed position, in which the valve needle (6) closes the injection opening (8), and having a pump unit which is integrated into the injection device (2) and which is designed to suck fluid out of a fluid supply (32) and supply said fluid at elevated pressure to the valve unit, wherein the pump unit has a piston chamber (34) and a movable piston (28), and wherein the volume of the piston chamber (34) can be varied by movement of the piston (28), **characterized in that** the piston (28) can be moved by energization of the coil (38) of an electromagnet or by means of a piezo actuator.

2. Injection device (2) according to Claim 1, wherein the valve unit and the pump unit are arranged within a common sleeve body.

3. Injection device (2) according to Claim 1 or 2, wherein the control chamber (36) is delimited by an end of the valve needle (6) and the volume of the control chamber can be varied by movement of the valve needle (6).

4. Injection device (2) according to Claim 3, wherein the control chamber (36) is hydraulically connected to the fluid supply (32).

5. Injection device (2) according to one of the preceding claims, wherein the piston chamber (34) is hydraulically connected to the fluid supply (32) by a one-way valve (20) which prevents a return of fluid from the piston chamber (34) into the fluid supply (32).

6. Injection device (2) according to Claim 5, wherein the piston chamber (34) is connected to the fluid supply (32) by the control chamber (36), and the one-way valve (20) is arranged between the piston chamber (34) and the control chamber (36).

7. Injection device (2) according to one of the preceding claims, wherein the piston (28) and the valve needle (6) are movable along a common axis.

8. Injection device (2) according to one of the preceding claims, wherein the piston (28) is movably supported by an elastic element (40).


**Revendications**

1. Dispositif d'injection (2), en particulier pour l'injection de fluide dans une ligne d'échappement d'un moteur à combustion interne, comprenant une unité de soupape qui présente
un pointeau de soupape (6),
un espace d'injection (38) avec au moins une ouverture d'injection (8) et un espace de commande (36), le dispositif d'injection (2) étant réalisé de telle sorte qu'une différence de pression entre l'espace d'injection (38) et l'espace de commande (36) provoque un déplacement du pointeau de soupape (6) entre une position ouverte dans laquelle le pointeau de soupape (6) libère un flux de fluide à travers l'ouverture d'injection (8) et une position fermée dans laquelle le pointeau de soupape (6) ferme l'ouverture d'injection (8),
et une unité de pompe intégrée dans le dispositif d'injection (2), qui est réalisée pour aspirer du fluide hors d'une alimentation en fluide (32) et pour le fournir à pression élevée à l'unité de soupape, l'unité de pompe présentant un espace de piston (34) et un piston mobile (28), et le volume de l'espace de piston (34) pouvant être modifié par déplacement du piston (28), **caractérisé en ce que** le piston (28) peut être déplacé par alimentation en courant de la bobine (38) d'un électroaimant ou au moyen d'un actionneur piézo-électrique.

2. Dispositif d'injection (2) selon la revendication 1, dans lequel l'unité de soupape et l'unité de pompe sont disposées à l'intérieur d'un corps de douille commun.

3. Dispositif d'injection (2) selon la revendication 1 ou 2, dans lequel l'espace de commande (36) est limité par une extrémité du pointeau de soupape (6) et le volume de l'espace de commande peut être modifié par déplacement du pointeau de soupape (6) .

4. Dispositif d'injection (2) selon la revendication 3, dans lequel l'espace de commande (36) est en liaison hydraulique avec l'alimentation en fluide (32) .

5. Dispositif d'injection (2) selon l'une quelconque des revendications précédentes, dans lequel l'espace de piston (34) est connecté hydrauliquement à l'alimentation en fluide (32) par une soupape unidirectionnelle (20) qui empêche un retour de fluide depuis l'espace de piston (34) dans l'alimentation en fluide (32).

6. Dispositif d'injection (2) selon la revendication 5, dans lequel l'espace de piston (34) est connecté à l'alimentation en fluide (32) par l'espace de commande (36) et la soupape unidirectionnelle (20) est disposée entre l'espace de piston (34) et l'espace de commande (36).

7. Dispositif d'injection (2) selon l'une quelconque des revendications précédentes, dans lequel le piston (28) et le pointeau de soupape (6) peuvent être déplacés le long d'un axe commun.

8. Dispositif d'injection (2) selon l'une quelconque des revendications précédentes, dans lequel le piston (28) est supporté de manière déplaçable par un élément élastique (40).

# Fig. 1

# Fig. 2

# Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1878920 A1
- US 20070295003 A1

- WO 2004042224 A1